# EUROPEAN PATENT SPECIFICATION

(11) **EP 0 697 658 B1**
(45) Date of publication and mention of the grant of the patent: **28.10.1998**
(21) Application number: 94306007.9
(22) Date of filing: 15.08.1994
(51) Int. Cl.: G06F 11/10

(54) **Automatic detection and enabling/disabling apparatus for computer memory system parity bits**
Gerät zur automatischen Erkennung und Aktivierung/Ausschaltung für Paritätsbits eines Rechnerspeicherssystems
Appareil de détection et d'activation/désactivation pour bits de parité de système de mémoire d'ordinateur

(43) Date of publication of application: 21.02.1996
(73) Proprietor: UNITED MICROELECTRONICS CORPORATION, Science-Based Industrial Park, Hsinchu City (TW)
(72) Inventor: Hwang, Chyou-Hsiung, East District, Hsinchu, (TW); Liu, David, Shih-Tung Rd., Taipei (TW)
(74) Representative: Overbury, Richard Douglas

(56) References cited:
- EP-A- 0 506 474
- US-A- 4 528 666
- ELECTRONIC DESIGN, vol.34, no.3, February 1986, HASBROUCK HEIGHTS, NEW JERSEY, USA pages 67 - 70 BURSKY 'By-9 DRAM packs parity circuit'
- RESEARCH DISCLOSURE, no.300, April 1989, NEW YORK, US page 279, XP000111665 'A Method for Automatically Disabling Parity in Graphics Memory'

## Description

### BACKGROUND OF THE INVENTION

### Field of the Invention

The present invention relates in general to parity checking logic circuitry for memory subsystems in computers. More particularly, the present invention relates to automatic detection and enabling/disabling logic apparatus for parity checking logic of memory subsystems in computers.

### Technical Background

Semiconductor dynamic random access memory (DRAM) have been widely employed in present-day computer systems as main memory based on its relatively inexpensive and high storage capacity, as well as density, when compared to other primary semiconductor memories, such as SRAMs (static random access memories) and ROMs (read-only memories). Stability of DRAMs are vital to normal computer operation. Any failed DRAM storage, even just a single bit, would possibly cause malfunction of the entire computer system.

Computer systems are usually equipped with some type of memory error detection, sometimes with error correction logic circuitry, to handle such memory failures. One commonly employed method of memory error checking is to install memory parity check bits and logic circuitry for every few bits of a data bus. A typical arrangement is to provide one parity bit for every 8 bits, or one parity bit for every byte of the data bus. For a typical 32-bit microcomputer system, there is a total of 4 parity bits, providing a 36 bit-wide data bus.

The function of memory parity check bits and their accompanying logic circuitry is to monitor the correctness of data bits while they are sent and received in the various portions of a computer system. Examples of parity checking circuits can been seen in EP-A-506474 or US-A-4 528 666. For example, in the memory subsystem architecture of one popular microcomputer system, when bytes of data are written by the central processing unit (CPU) of the system to the main memory comprising of blocks of DRAM, all 8 bits, or all the bits in one byte, are added together to generate a parity bit, which is stored together with its data bits in the memory location with the same address.

Two types of parity exist, odd and even parity. For odd parity, the parity bit ensures that all its corresponding data bits and the parity bit itself are added together to generate an odd sum. On the other hand, in an even parity system, the added result must be an even sum. In other words, in an odd parity system, if the sum of all of the bits in a byte provide an even result, then the parity bit will be a "1". If the added result is odd, then the parity bit will be a "0".

Thus, all memory locations in the memory blocks should maintain either odd or even parity, and whenever any data content is retrieved from its memory location, the parity, either odd or even, is re-checked to see if a violation of the parity rule, possibly caused by one or more memory bit failures, has occurred. Any parity check failure would likely signify some failure in the memory bits of the memory location at which those bits were retrieved. An error handling routine would then be initiated to either attempt to correct the identified error, if a correction logic is present in the system, or to issue a warning message and sometimes halt the system.

In the microcomputer industry where the competition is fierce in the last few years, the pressure for reducing prices has led to the consideration of whether or not the simple memory failure detection capability provided by a parity check logic is necessary in the microcomputer system. As indicated above, the parity check logic is only capable of reporting that the violation of memory parity is present. If in one byte of data, two bits had failed simultaneously with their data contents changed, then the parity still complies. In other words, if there are an even number, e.g., two, of memory bits in one memory location that have failed and thus have changed state, then the simple one-dimensional parity check scheme will be unaware of the memory failure condition. No message of the memory failure will issue because there is no triggering by the parity checking logic to signify the fact that two bits had failed.

On the other hand, even if the indication of memory failure can be issued, the situation would not help unless there is an effective error correction logic present in the system to facilitate the recovery of the lost data bits. Cost of such an error correction subsystem is, however, high and there is rarely error correction logic seen in the category of low cost microcomputer systems. A typical parity-based error detection logic is able to trip a service routine showing the address of the memory location that had failed. It is, however, frequently the situation that the system failed to transport the error messages to the display device, normally the system monitor, before it stopped the operation altogether. Even if the system has the opportunity to issue a complete message identifying the memory failure problem, it is also frequently the situation that the user of the system does not have the opportunity to perform a system shutdown procedure to minimize the damage the memory failure had caused. Therefore, the best possible function a simple one-dimensional parity checking scheme can achieve is only to show to the system user that it is the memory subsystem that had failed and caused the system to hang.

Therefore, it is questionable that a low cost personal or home computer system should be equipped with a parity checking logic circuitry, which requires an additional 10% or more memory, e.g., one parity bit for every byte of data in a bus than those systems not equipped with parity logics.

Conventional microcomputer systems are equipped with one-dimensional parity checking logic circuitry, which does not have the capability to identify whether or not the required parity bits are installed in the memory subsystem. If a system has non-parity memory devices installed, the system would not start at all.

### SUMMARY OF THE INVENTION

It is therefore a primary object of the present invention to provide an automatic detection and enabling/disabling apparatus for computer memory subsystems parity bit that can detect whether or not the computer system has memory parity bits installed.

It is another object of the present invention to provide an automatic detection and enabling/disabling apparatus for computer memory subsystems parity bits that allows for the disabling of the parity check logic if no parity bit is installed.

These objects are achieved by a device according to Claim 1 and a method according to Claim 11. Advantageous embodiments are specified by the features of the dependent claims.

### BRIEF DESCRIPTION OF THE DRAWING

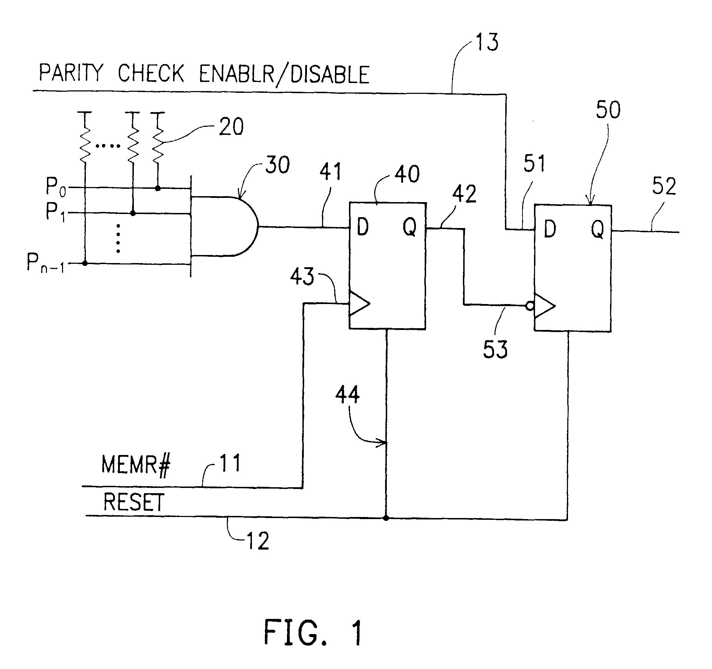

Other objects, features and advantages of the present invention will become apparent by way of the presentation of the following detailed description of the preferred but non-limiting embodiments, with references to the accompanied drawing, wherein the single drawing Figure 1 is a schematic diagram of a preferred embodiment of the automatic detection and enabling/disabling apparatus for computer memory subsystem parity bits.

### DETAILED DESCRIPTION OF THE PREFERRED EMBODIMENT

Fig. 1 illustrates a schematic diagram of a preferred embodiment of the automatic detection and enabling/disabling apparatus for computer memory subsystem parity bits of the present invention.

Assume a computer system utilizes n bits, namely P0, P1, ..., Pn-1, for parity in its data bus. In the embodiment shown in Figure 1, these n parity bits may be for n bytes of data in its system data bus. For example, in a 32-bit data bus microcomputer system, there are four parity bits, and in a 64-bit system, there are eight bits for parity.

In the preferred embodiment shown, all parity bits P0-Pn-1 are supplied to the respective inputs of an n-input AND gate 30. The AND gate 30 can be replaced by a combinational logic circuit whenever necessary. Each parity bit P0-Pn-1 is also pulled high to the system power electric potential through resistors 20 which have the proper resistance value. The output of the AND gate 30 is connected to the input 41 of a flip-flop 40. This flip-flop 40 can be a D-type flip-flop, having its Q output 42 connected to the clock input 53 of another flip-flop 50. Flip-flop 50 can also be a D-type flip-flop, having its D input controlled by the parity check enable/disable select signal 13 supplied by the computer system under the control of the computer system user.

Moreover, the clock input of D-type flip-flop 40 is connected to a memory read strobe signal, MEMR# 11, supplied by the computer system, indicating the memory accessing status of the system. This signal is a memory control signal of the computer system, which is typically provided by the memory controller logic of the system when the CPU requires access of the memory. In addition, the preset input 44 of the flip-flop 40, together with the preset input 56, is controlled by the reset signal RESET 12 generated by the system. This RESET signal 12 is typically supplied at the time when the system is powered up or is reset for start up.

If the user of the computer system decides that no parity bits are to be installed in the memory subsystem, then the inputs to the AND gate 30 will all be pulled to the high signal state due to the presence of the pull up resistors 20. The AND gate 30 will then output a steady high state signal at its output, which in turn is connected to the D input of the D-type flip-flop 40.

Since the parity bits are not present in the memory subsystem, the D input to the D-type flip-flop 40 will maintain a high state signal at all times. When power is applied to the system, and the computer starts up, the system will initiate itself by providing a reset signal RESET 12 to all the required parts of the entire system including the set (or preset) and reset inputs of the two D-type flip-flops 40 and 50 respectively. Upon such initialization (or re-initialization), D-type flip-flop 40 is set to provide a "1" at its Q output 42 and D-type flip-flop 50 is reset to provide a "0" at its Q output 52. When the computer system supplies the memory read strobe signal MEMR# to the clock input 43 of D-type flip-flop 40, the flip-flop latches the signal supplied to its D input 41 and supplies the latched value at its Q output 42. Since AND gate 30 always supplies a high state signal in the absence of the parity bits, D-type flip-flop 40 always stores and outputs the value "1" to the clock input 53 of D-type flip-flop 50. In turn, D-type flip-flop 50 is never clocked and thus, never latches the signal supplied to its D input 51. Therefore, the automatic detection and enabling/disabling apparatus of the present invention shown in Figure 1 as a preferred embodiment will always output a steady "0" low state signal to the memory parity logic, and keep the memory parity logic in a disabled state. With a secured disabled signal to the memory parity check logic of the system, the memory parity logic would not be accidentally triggered to cause the system to malfunction due to the non-presence of the memory subsystem.

On the other hand, when there are memory parity bits installed in the memory subsystem of the computer system, the input to the AND gate 30 would not necessarily be all steady "1" high signal states. Instead, during the initialization stage of the system after power is turned on, or, after the system is reset, the system hardware, under firmware control (or under software control), will send selected data onto the data bus which causes all the parity bits P0, P1, ..., Pn-1, to become "0" (whether or not the parity scheme is an odd or even design), so as to cause the output of the AND gate 30 to yield a 0". When the CPU of the computer system attempts to access the memory locations, the system memory controller-supplied signal MEMR# 11 provided to input 43 will trip the "0" input at the D input 41 of the D-type flip-flop 40 and latch it to its Q output 42.

At the initial stage when the system is first initialized, the signal RESET 12 presets the D-type flip-flop 40 at its Q output 42 to a "1". Therefore, what is observed at the Q output 42 of flip-flop 40 is a "1" to "0" transition, which will in turn cause the latching of the user-defined parity check enable/disable signal 13 supplied to the D input of the second D-type flip-flop 50 to its output 52 by clocking flip-flop 50 at its clock input 53. The output signal of the flip-flop 50, when it is a "1", represents the system should enable its parity checking scheme, or a "0" to disable it. It is therefore readily available for the memory parity check logic to decide.

## Claims

1. Apparatus for detecting the existence of a parity checking logic circuit in a computer system, the parity checking logic circuit supplying a plurality of parity bits (P₀, ...,Pₙ₋₁) each having a high or low value when it exists, the apparatus comprising:
pull-up means (20) for pulling-up the values of said parity bits to the high value when said parity checking logic circuit does not exist in said computer system;
signal generating means (30) for generating a signal having a high value when all of the parity bits are high and generating a signal having a low value when at least one of said parity bits is low;
means (11, 12) for receiving a memory read signal (MEMR#) and a reset signal (RESET) from said computer system;
a first latch (40) having a data input (D), a data output (Q), a set input and a clock input, said first latch (40) latching said generated signal (41) supplied to its data input to its data output when said memory read signal (11) is supplied to its clock input, said first latch being set to a high value when said reset signal (12) is supplied to its set input (44);
means (13) for receiving a parity checking enable/disable signal, said parity checking enable/disable signal having a high value to indicate that parity checking is enabled when said parity checking logic circuit exists and said parity checking enable/disable signal being low to indicate that parity checking is disabled independent of when said parity checking logic circuit exists; and
a second latch (50) having a data input (D), a data output (Q), a reset input and a clock input, said second latch (50) latching said parity checking enable/disable signal supplied to its data input to its data output when the data output of said first latch supplied to the data input of the second latch changes from a high value to a low value, said second latch being reset to a low value when said reset signal is supplied to said reset input of said second latch, wherein said data output of said second latch indicates that parity checking is disabled when it has a low value and that parity checking is enabled when it has a high value.

2. The apparatus of claim 1, wherein said signal generating means is an AND gate (30) having a plurality of inputs for receiving said parity bits.

3. The apparatus of claim 1, wherein said first and second latches (40, 50) are D-type flip-flops.

4. The apparatus of claim 1, wherein the pull-up means includes a plurality of pull-up resistors (20) for pulling-up the values of the parity bits to the high value when said parity checking logic circuit does not exist in said computer system.

5. A memory parity detection and enabling/disabling apparatus for a computer system, wherein the computer system comprises a central processing unit, a memory subsystem, a memory controller logic, a memory parity checking logic comprising a plurality of parity bits, and a flagging signal setting logic for selecting the enabling or disabling of the computer system parity checking scheme,
characterized by an apparatus according to Claim 2, 3, or 4, wherein that said plurality of inputs of said AND gate are each fetched by one parity bit of said memory parity checking logic, each parity bit is pulled up to the high state signal level of said computer system through a respective resistor (20) of selected resistance value, the data input (D) of said second flip-flop (50) is fetched by said flagging signal (13), the clock input of said first flip-flop is connected to the memory access status signal (11) generated by said memory controller logic, and the preset input of said first flip-flop and the reset input of the second flip-flop are connected together and fetched by the reset signal (12) generated by the computer system.

6. The memory parity detection and enabling/disabling apparatus of claim 5, wherein said memory parity checking scheme is an odd parity scheme.

7. The memory parity detection and enabling/disabling apparatus of claim 5, wherein said memory parity checking scheme is an even parity scheme.

8. The memory parity detection and enabling/disabling apparatus of claim 5, wherein the number of parity bits is 4, and each parity bit supports 8 bits of the data bus of the computer system.

9. The memory parity detection and enabling/disabling apparatus of claim 5, wherein the number of parity bits is 8, and each parity bit supports 8 bits of the data bus of the computer system.

10. The memory parity detection and enabling/disabling apparatus of claim 5, wherein the AND gate is comprised of a combinational logic circuitry.

11. A method of detecting the existence of a parity checking logic circuit in a computer system, the parity checking logic circuit supplying a plurality of parity bits each having a first or second value when it exists, said parity bits having said first value when said parity checking logic circuit does not exist in said computer system, comprising the steps of:
receiving said plurality of parity bits (P₀, ...,Pₙ₋₁);
generating a signal (41) in response to said values of said parity bits, said generated signal having said first value when all of said parity bits have said first value and said generated signal having said second value when at least one of said parity bits has said second value;
setting a first latch (40) to have an output signal having said first value;
resetting a second latch (50) to have an output signal having said second value;
receiving a parity checking enable/disable signal (13);
latching said generated signal (41) by said first latch (40) to have an output signal (42) equivalent to said value of said generated signal;
latching said parity checking enable/disable signal by said second latch (50) when said output of said first latch changes from said first value to said second value, said second latch supplying as an output (52) said latched signal to indicate whether parity checking is enabled or disabled in accordance with said parity checking enable/disable signal when said second latch latches, said second latch supplying said second value when said second latch does not latch to indicate that parity checking is disabled.

## Patentansprüche

1. Vorrichtung zum Detektieren des Vorhandenseins einer Paritätsprüfungs-Logikschaltung in einem Computersystem, wobei die Paritätsprüfungs-Logikschaltung mehrere Paritäts-Bits (P0,....,Pn-1) ausgibt, die high oder low sind, falls eine Paritätsprüfungs-Logikschaltung vorhanden ist, wobei die Vorrichtung aufweist:
eine Pull-up-Einrichtung (20), die die Pegel der Paritäts-Bits auf high hochzieht, falls in dem Computer-System keine Paritätsprüfungs-Logikachaltung existiert;
eine Signalerzeugungseinrichtung (30), die ein Signal mit einem High-Pegel erzeugt, falls sämtliche Paritäts-Bits high sind, und die ein Signal mit einem Low-Pegel erzeugt, falls mindestens eines der Paritäts-Bits low ist;
eine Einrichtung (11,12) zum Empfang eines Speicherlesesignals (MEMR#) und eines Rücksetzsignals (RESET) von dem Computersystem;
eine erste Halteschaltung (40) mit einem Dateneingang (D), einem Datenausgang (Q), einem Setzeingang und einem Takteingang, wobei die erste Halteschaltung (40) das ihrem Dateneingang zugeführte erzeugte Signal (41) an ihrem Datenausgang hält, wenn das Speicherlesesignal (11) ihrem Takteingang zugeführt wird, wobei die erste Halteschaltung auf high gesetzt wird, wenn das Rücksetzsignal (12) ihrem Setzeingang (44) zugeführt wird;
eine Einrichtung (13) zum Empfang eines Paritätsprüfungs-Aktivierungs-/Deaktivierungs-Signals, das, falls eine Paritätsprüfungs-Logikschaltung vorhanden ist, high ist, um anzuzeigen, daß die Paritätsprüfung aktiviert ist, und das unabhängig davon, ob eine Paritätsprüfungs-Logikschaltung vorhanden ist, low ist, um anzuzeigen, daß die Paritätsprüfung deaktiviert ist; und
eine zweite Halteschaltung (50) mit einem Dateneingang (D), einem Datenausgang (ℓ), einem Rücksetzeingang und einem Takteingang, wobei die zweite Halteschaltung (50) das ihrem Dateneingang zugeführte Paritätsprüfungs-Aktivierungs-/Deaktivierungs-Signal an ihrem Datenausgang hält, wenn das dem Dateneingang der zweiten Halteschaltung zugeführte Daten-Ausgangssignal der ersten Halteschaltung von high nach low wechselt, die zweite Halteschaltung auf low rückgesetzt wird, wenn das Rücksetzsignal dem Rücksetzeingang der zweiten Halteschaltung zugeführt wird, wobei der Datenausgang der zweiten Halteschaltung, wenn er low ist, die Deaktivierung der Paritätsprüfung anzeigt, und wenn er high ist, die Aktivierung der Paritätsprüfung anzeigt.

2. Vorrichtung nach Anspruch 1, bei der die Signalerzeugungseinrichtung ein UND-Gatter (30) mit mehreren Eingängen zum Empfangen der Paritäts-Bits ist.

3. Vorrichtung nach Anspruch 1, bei der die ersten und zweiten Halteschaltungen (40,50) Flip-flops vom D-Typ sind.

4. Vorrichtung nach Anspruch 1, bei der die Pull-up-Einrichtung mehrere Pull-up-Widerstände (20) aufweist, die die Pegel der Paritäts-Bits auf high hochzieht, falls in dem Computersystem keine Paritätsprüfungs-Logikschaltung existiert.

5. Speicherparitäts-Detektions- und Aktivierungs-/Deaktivierungs-Vorrichtung für ein Computersystem, wobei das Computersystem eine zentrale Verarbeitungseinheit, ein Speicher-Untersystem, eine Speicher-Steuerlogik, eine Speicherparitätsprüfungs-Logik mit mehreren Paritäts-Bits und eine Flaggensignalsetz-Logik zum Wählen des Aktivierens oder Deaktivierens des Computersystem-Paritätsprüfungsschemas aufweist,
gekennzeichnet durch eine Vorrichtung nach Anspruch 2, 3 oder 4, bei der die mehreren Eingänge des UND-Gatters jeweils durch ein Paritäts-Bit der Speicherparitätsprüfungs-Logik erhalten werden, jedes Paritäts-Bit durch einen jeweiligen Widerstand (20) mit gewähltem Widerstandswert auf den High-Pegel des Computersystems hochgezogen wird, der Dateneingang (D) des zweiten Flip-Flops (50) durch das Flaggensignal (13) erhalten wird, der Takteingang des ersten Flip-flops mit dem durch die Speicher-Steuerlogik erzeugten Speicherzugriffsstatus-Signal (11) verbunden ist, und das voreingestellte Eingangssignal des ersten Flip-flops und das rückgesetzte Eingangssignal des zweiten Flip-flops miteinander verbunden werden und mittels des durch das Computersystem erzeugte Rücksetzsignal abgegriffen werden.

6. Speicherparitäts-Detektions- und Aktivierungs-/Deaktivierungs-Vorrichtung nach Anspruch 5, bei dem das Speicherparitäts-Prüfschema ein Ungeradzahl-Paritätsschema ist.

7. Speicherparitäts-Detektions- und Aktivierungs-/Deaktivierungs-Vorrichtung nach Anspruch 5, bei dem das Speicherparitäts-Prüfschema ein Geradzahl-Paritätsschema ist.

8. Speicherparitäts-Detektions- und Aktivierungs-/Deaktivierungs-Vorrichtung nach Anspruch 5, bei dem die Anzahl von Paritäts-Bits 4 beträgt und jedem Paritäts-Bit 8 Bits des Datenbusses des Computersystem zugeordnet sind.

9. Speicherparitäts-Detektions- und Aktivierungs-/Deaktivierungs-Vorrichtung nach Anspruch 5, bei dem die Anzahl von Paritäts-Bits 8 beträgt und jedem Paritäts-Bit 8 Bits des Datenbusses des Computersystem zugeordnet sind.

10. Speicherparitäts-Detektions- und Aktivierungs-/Deaktivierungs-Vorrichtung nach Anspruch 5, bei dem das UND-Gatter aus einer kombinatorschen Logik-Schaltung besteht.

11. Verfahren zum Detektieren des Vorhandenseins einer Paritätsprüfungs-Logikschaltung in einem Computersystem, wobei die Paritätsprüfungs-Logikschaltung mehrere Paritäts-Bits ausgibt, die, sofern vorhanden, jeweils einen ersten oder einen zweiten Pegel haben, wobei die Paritäts-Bits den ersten Pegel haben, wenn in dem Computersystem keine Paritätsprüfungs-Logikschaltung existiert, wobei das Verfahren die folgenden Schritte umfaßt:
Empfangen der mehreren Paritäts-Bits (P0,...., Pn-1),
Erzeugen eines Signals (41) auf die Pegel der Paritäts-Bits hin, wobei das erzeugte Signal den ersten Pegel hat, wenn sämtliche Paritäts-Bits den ersten Pegel haben, und das erzeugte Signal den zweiten Pegel hat, wenn mindestens eines der Paritäts-Bits den zweiten Pegel hat;
Setzen des Ausgangssignals der ersten Halteschaltung (40) auf den ersten Pegel;
Rücksetzen des Ausgangssignals einer zweiten Halteschaltung (50) auf den zweiten Pegel;
Empfangen eines Parititsprufungs-Aktivierungs-/Deaktivierungs-Signals (13) ;
Halten des erzeugten Signals (41) mittels der ersten Halteschaltung (40) derart, um ein dem Pegel des erzeugten Signals gleiches Ausgangssignal (42) zu erzeugen;
Halten des Paritätsprüfungs-Aktivierungs-/Deaktivierungs-Signals mittels der zweiten Halteschaltung (50), wenn das Ausgangssignal der ersten Halteschaltung von dem ersten Pegel auf den zweiten Pegel wechselt, wobei die zweite Halteschaltung, wenn sie ein Signal hält, entsprechend dem Paritätsprüfungs-Aktivierungs-/Deaktivierungs-Signal als Ausgangssignal (32) das gehaltene Signal ausgibt, um anzuzeigen, ob die Paritätsprüfung aktiviert oder deaktiviert ist, und die zweite Halteschaltung, wenn sie kein Signal hält, den zweiten Pegel ausgibt, um anzuzeigen, daß die Paritätsprüfung deaktiviert ist.

## Revendications

1. Appareil de détection de l'existence d'un circuit logique de vérification de parité dans un système informatique, le circuit logique de vérification de parité fournissant, quand il existe, une pluralité de bits de parité (P₀, Pₙ₋₁) qui ont chacun une valeur haute ou une valeur basse, l'appareil comprenant :
- un moyen (20) de décalage vers le haut, servant à décaler les valeurs desdits bits de parité vers la valeur haute quand ledit circuit logique de vérification de parité n'existe pas dans ledit système informatique,
- un moyen (30) de génération de signal, servant à produire un signal de valeur haute quand tous les bits de parité sont hauts et à produire un signal de valeur basse quand l'un au moins desdits bits de parité est bas,
- des moyens (11, 12) servant à recevoir un signal de lecture de mémoire (MEMREAD) et un signal de ré-initialisation (RESET) en provenance dudit système informatique,
- une première bascule (40) comportant une entrée de données (D), une sortie de données (Q), une entrée d'initialisation et une entrée d'horloge, ladite première bascule (40) basculant ledit signal produit (41) fourni à son entrée de données vers sa sortie de données quand ledit signal (11) de lecture de mémoire est appliqué à son entrée d'horloge, ladite première bascule étant positionnée sur une valeur haute quand ledit signal de ré-initialisation (12) est appliqué à son entrée d'initialisation (44),
- un moyen (13) destiné à recevoir un signal d'activation/désactivation de la vérification de parité, ledit signal d'activation/désactivation de la vérification de parité étant à une valeur haute pour indiquer que la vérification de parité est activée quand ledit circuit logique de vérification de parité existe, et ledit signal d'activation/désactivation de la vérification de parité étant à une valeur basse pour indiquer que la vérification de parité est désactivée indépendamment du fait que ledit circuit logique de vérification de parité existe, et
- une deuxième bascule (50) comportant une entrée de données (D), une sortie de données (Q), une entrée de ré-initialisation et une entrée d'horloge, ladite deuxième bascule (50) basculant ledit signal d'activation/désactivation de la vérification de parité fourni à son entrée de donnée vers sa sortie de données quand la sortie de données de ladite première bascule appliquée à l'entrée de données de ladite deuxième bascule passe d'une valeur haute à une valeur basse, ladite deuxième bascule étant remise à une valeur basse quand ledit signal de ré-initialisation est appliqué à ladite entrée de ré-initialisation de ladite deuxième bascule, ladite sortie de données de ladite deuxième bascule indiquant que la vérification de parité est désactivée quand elle a une valeur basse et que la vérification de parité est activée quand elle a une valeur haute.

2. Appareil selon la revendication 1, dans lequel ledit moyen de production de signal est une porte ET (30) comportant une pluralité d'entrées pour recevoir lesdits bits de parité.

3. Appareil selon la revendication 1, dans lequel lesdites première et deuxième bascules (30, 50) sont des flip-flop de type D.

4. Appareil selon la revendication 1, dans lequel ledit moyen de décalage vers le haut comprend une pluralité de résistance élévatrices (20) servant à décaler les valeurs des bits de parité vers la valeur haute quand ledit circuit logique de vérification de parité n'existe pas dans ledit système informatique.

5. Appareil de détection de parité de mémoire et d'activation/désactivation pour système informatique, dans lequel le système informatique comprend une unité centrale de traitement, un sous-ensemble de mémoire, un circuit logique de commande de mémoire, un circuit logique de vérification de parité de mémoire qui comprend une pluralité de bits de parité, et un circuit logique d'établissement de signal indicateur servant à choisir l'activation ou la désactivation de la procédure de vérification de parité du système informatique,
caractérisé par un appareil selon les revendications 2, 3 ou 4, dans lequel lesdites entrées de ladite porte ET sont toutes appelées par un premier bit de parité dudit circuit logique de vérification de parité de mémoire, chaque bit de parité est décalé vers le niveau de signal haut dudit système informatique par l'intermédiaire d'une résistance correspondante (20) ayant une valeur ohmique choisie, l'entrée de données (D) de ladite deuxième bascule flip-flop (50) est appelée par ledit signal indicateur (13), l'entrée d'horloge de ladite première bascule flip-flop est couplée à un signal (11) de statut d'accès à la mémoire produit par ledit circuit logique de commande de mémoire, et l'entrée d'initialisation de ladite première bascule flip-flop et l'entrée de ré-initialisation de ladite deuxième bascule flip-flop sont couplées l'une à l'autre et appelées par le signal de ré-initialisation (12) produit par le système informatique.

6. Appareil de détection de parité de mémoire et d'activation/désactivation selon la revendication 5, dans lequel ladite procédure de vérification de parité de mémoirc est une procédure de parité impaire.

7. Appareil de détection de parité de mémoire et d'activation/désactivation selon la revendication 5, dans lequel ladite procédure de vérification de parité de mémoire est une procédure de parité paire.

8. Appareil de détection de parité de mémoire et d'activation/désactivation selon la revendication 5, dans lequel le nombre de bits de parité est de 4, et chaque bit de parité supporte 8 bits du bus de données du système informatique.

9. Appareil de détection de parité de mémoire et d'activation/désactivation selon la revendication 5, dans lequel le nombre de bits de parité est de 8, et chaque bit de parité supporte 8 bits du bus de données du système informatique.

10. Appareil de détection de parité de mémoire et d'activation/ désactivation selon la revendication 5, dans lequel la porte ET est formée d'un circuit de logique combinatoire.

11. Procédé de détection de l'existence d'un circuit logique de vérification de parité dans un système informatique, le circuit logique de vérification de parité fournissant, quand il existe, une pluralité de bits de parité qui ont chacun une première ou une deuxième valeur, lesdits bits de parité ayant ladite première valeur quand ledit circuit logique de vérification de parité n'existe pas dans ledit système informatique, comprenant les étapes consistant à :
- recevoir ladite pluralité de bits de parité (P₀, ..., Pₙ₋₁),
- produire un signal (41) en réponse auxdites valeurs desdits bits de parité, ledit signal produit ayant ladite première valeur quand tous lesdits bits de parité ont ladite première valeur et ledit signal produit ayant ladite deuxième valeur quand l'un au moins desdits bits de parité a ladite deuxième valeur,
- initialiser une première bascule (40) pour avoir un signal de sortie qui a ladite première valeur,
- ré-initialiser une deuxième bascule (50) pour avoir un signal de sortie qui a ladite deuxième valeur,
- recevoir un signal (13) d'activation/désactivation de la vérification de parité,
- maintenir ledit signal produit (41) avec ladite première bascule (40) pour avoir un signal de sortie (42) équivalent à ladite valeur dudit signal produit,
- maintenir ledit signal d'activation/désactivation de la vérification de parité avec ladite deuxième bascule (50) quand ladite sortie de ladite première bascule passe de ladite première valeur à ladite deuxième valeur, ladite deuxième bascule fournissant en sortie (52) ledit signal verrouillé pour indiquer si la vérification de parité est activée ou désactivée en accord avec ledit signal d'activation/désactivation de la vérification de parité quand ladite deuxième bascule agit, ladite deuxième bascule fournissant ladite deuxième valeur quand ladite deuxième bascule n'agit pas, pour indiquer que la vérification de parité est désactivée.
